# FASCICULE DE BREVET EUROPEEN

(11) **EP 2 687 267 B1**
(45) Date de publication et mention de la délivrance du brevet: **31.07.2019**
(21) Numéro de dépôt: 13176786.5
(22) Date de dépôt: 17.07.2013
(51) Int. Cl.: A62B 35/00, E04G 21/32, E04D 13/12, H01L 31/042, F24S 25/60, F24S 25/61

(54) **Dispositif d'ancrage sur une toiture, en particulier sur une toiture avec membrane d'étanchéité**
Verankerungsvorrichtung auf einem Dach, insbesondere auf einem Dach mit Abdichtfolie
Device for anchoring on a roof, in particular on a roof with a sealing membrane

(30) Priorité: 19.07.2012 LU 92047
(43) Date de publication de la demande: 22.01.2014
(73) Titulaire: Capital Access S.A., 4959 Bascharage (LU)
(72) Inventeur: Timmermans, Francis, 7303 Steinsel (LU)
(74) Mandataire: Office Freylinger

(56) Documents cités:
- EP-A1- 1 061 197
- EP-A2- 2 317 029
- WO-A2-2007/089139
- DE-A1-102007 039 966

## Description

### Domaine technique

La présente invention concerne un dispositif d'ancrage sur une toiture, en particulier sur une toiture avec membrane d'étanchéité, par ex. type bac étanché, pouvant être utilisé pour y fixer un anneau d'ancrage, ou une ancre de ligne de vie, ou tout élément similaire visant à empêcher la chute d'une personne, ou encore pour y fixer d'autres objets, tels que des panneaux solaires, appareils de climatisation, haubanages d'antennes, etc.

Les dispositifs d'ancrage visés par l'invention sont destinés à être installés à demeure sur des toitures en béton, bac étanché et panneaux sandwich, etc., disposés sensiblement horizontalement, ou avec une faible inclinaison, typiquement jusqu'à 15°.

### Etat de la technique

Dans le domaine des équipements de sécurité anti-chutes, de tels dispositifs, pourvus d'anneaux d'ancrage, visent typiquement à assurer la sécurité du personnel de maintenance intervenant sur ladite toiture en y reliant le personnel par une longe (corde, câble, sangle ou autre lien similaire). Les panneaux solaires installés sur une toiture existante doivent aussi y être fixés de manière suffisamment fiable pour supporter le poids des panneaux, et résister aux intempéries, vent, etc, et aux efforts d'arrachement qui peuvent en résulter. De tels dispositifs d'ancrage peuvent aussi servir à fixer d'autres objets destinés ou non à la sécurité des personnes.

Les dispositifs d'ancrage connus sont fixés sur la toiture par le dessus, et certains comportent à cette fin une platine de fixation sur laquelle une tige est solidarisée par une extrémité, l'autre extrémité de cette tige étant agencée pour y fixer, par vissage, un organe d'accrochage pour un lien ou ligne de vie destiné à relier une personne au dispositif. Comme notamment mentionné dans NL-1035225, la platine est prévue pour être fixée solidement sur la toiture, par plusieurs boulons, vis traversantes, ou tous autres organes de fixation de type connu, répartis à la périphérie de la platine et adaptés, en fonction du matériau de la toiture, pour résister aux efforts importants auxquels le dispositif peut être soumis en cas de chute de la personne qui y est reliée.

D'autres systèmes, par exemple décrits dans AU2006225203 ou US2003/0182893, comportent seulement une seule tige ou boulon central agencé pour être fixé par une extrémité directement sur la toiture, et son autre extrémité étant filetée pour y fixer un organe d'accrochage.

Un problème général de ces dispositifs est qu'ils nécessitent de traverser la couverture qui en assure l'étanchéité. Ce problème est particulièrement crucial lorsque les dispositifs d'ancrage sont fixés sur des toitures dont l'étanchéité est assurée par une membrane d'étanchéité, typiquement bitumineuse ou en PVC ou EPDM. La nécessité de percer cette membrane d'étanchéité pour fixer les dispositifs d'ancrage conduit à un risque important de perte d'étanchéité, par infiltration de l'eau entre les moyens de fixation desdits dispositifs et ladite membrane d'étanchéité.

Certains systèmes existants tentent de remédier à ce problème par l'utilisation d'un cache, sous forme d'une collerette pré-assemblée sur la platine de fixation et agencée pour recouvrir les vis de fixation après leur mise en place. Mais il est alors nécessaire de passer sous cette collerette, et/ou de la maintenir temporairement relevée pendant le temps de la fixation, pour pouvoir mettre en place et serrer les vis de fixation, ce qui complique cette opération et d'autre part la membrane est percée 3 ou 4 fois pour implanter les boulons d'ancrage.
Le EP 1061197 décrit un dispositif d'ancrage comprenant une platine fixée à la toiture par une tige d'ancrage dont l'extrémité supérieure est visée dans un logement dans la face inférieure de la platine.

Par ailleurs, des systèmes, tels que celui décrit dans AU2006225203, peuvent comporter une sorte de dôme, notamment tronconique, solidaire de la platine, permettant de surélever le point d'attache de l'organe d'accrochage par rapport à la surface de la toiture, ceci afin de fournir des caractéristiques particulières de résistance mécanique ou d'amortissement des efforts, entre la platine et ledit point d'attache. Dans d'autres cas, une telle surélévation peut participer à une amélioration de l'étanchéité en évitant la pénétration d'eau de ruissellement ou d'eau stagnante au niveau de l'émergence de l'extrémité de la tige sur laquelle est fixé l'organe d'accrochage. Pour autant, dans la mesure où l'étanchéité entre l'organe d'accrochage, la tige filetée et le dôme ne résulte que du serrage de l'écrou de maintien dudit organe, cette étanchéité risque d'être insuffisante, d'autant plus si des efforts importants se produisent sur l'extrémité de la tige.

### Objet de l'invention

Un but de la présente invention est donc de résoudre les problèmes indiqués ci-dessus, ou au moins d'en limiter les effets, en assurant une meilleure étanchéité des dispositifs d'ancrage, tout en en facilitant la mise en place sur toiture.

### Description générale de l'invention

Avec ces objectifs en vue, l'invention a pour objet un dispositif d'ancrage à monter sur une toiture, pour fixer un objet sur ladite toiture, du type comportant une platine destinée à reposer sur la toiture et comportant un trou central traversant, et une tige d'ancrage passant à travers le trou central de la platine, et agencée pour être solidarisée sur la toiture par son extrémité inférieure et comprenant vers son extrémité supérieure un filetage recevant un écrou de fixation pour serrer la platine contre la toiture, le dispositif d'ancrage comportant aussi des moyens d'étanchéité pour assurer une étanchéité entre la tige d'ancrage et la platine et, à son extrémité supérieure, des moyens de fixation pour y fixer ledit objet.

Selon l'invention, le dispositif d'ancrage est caractérisé en ce qu'il comporte par ailleurs un écrou d'étanchéité borgne vissé à l'extrémité supérieure du dispositif et agencé pour chapeauter, et donc protéger, l'extrémité de la tige d'ancrage et l'écrou de fixation, l'écrou d'étanchéité portant lesdits moyens de fixation. Cet écrou d'étanchéité forme donc une sorte de capuchon qui recouvre l'extrémité de la tige d'ancrage et l'écrou de fixation et les protège de la pluie. De préférence, l'écrou d'étanchéité comporte un bord annulaire inférieur venant en appui sur la platine, ce bord annulaire inférieur étant avantageusement pourvu d'un joint d'étanchéité pour une bonne étanchéité en appui sur la platine. Selon un autre aspect, l'écrou d'étanchéité comporte une vis fixée de manière étanche dans un perçage réalisé au fond de l'écrou d'étanchéité.

L'écrou d'étanchéité borgne recouvre entièrement l'extrémité supérieure de la tige d'ancrage et son écrou de fixation, et les protège ainsi des intempéries en particulier la pluie. De plus, le serrage de l'écrou d'étanchéité assure une liaison étanche entre celui-ci et la platine, empêchant toute entrée d'eau au niveau des organes de fixation du dispositif sur le toit, même dans le cas où le dispositif d'ancrage viendrait à être submergé.

Selon une disposition préférentielle, le dispositif d'ancrage comprend en outre un tube fileté assujetti de manière rigide et étanche sur la platine en passant dans le trou central et comportant une partie débordante dépassant au-dessus de la platine, la tige d'ancrage passant dans le tube fileté et l'écrou de fixation venant en appui, de préférence étanche, sur l'extrémité supérieure de la partie débordante du tube fileté. Selon une disposition particulière, le tube fileté est assujetti sur la platine par deux écrous enserrant la platine avec des joints d'étanchéité, le bord annulaire inférieur de l'écrou d'étanchéité entourant l'écrou, respectivement la partie de tube fileté, situé(e) au-dessus de la platine.

L'utilisation d'un tube fileté de plus grand diamètre que la tige d'ancrage permet de renforcer l'étanchéité. En effet, assurer l'étanchéité directement entre la tige d'ancrage et la platine lors du montage sur toiture est possible, mais délicat car cela nécessite un parfait positionnement entre la tige d'ancrage et la platine. Comparativement, l'assemblage du tube fileté et de la platine, conformément à cette disposition préférentielle, peut être préparé en atelier et donc assurer une étanchéité plus fiable que si cela était réalisé sur la toiture lors de la mise en place du dispositif d'ancrage. Il reste cependant à assurer l'étanchéité entre la tige d'ancrage et le tube fileté, mais cela est plus aisé du fait que l'appui étanche est alors réalisé entre une extrémité frontale du tube fileté et l'écrou de fixation, sur une zone de dimension plus réduite. De plus, la fixation du tube fileté sur la platine assure un certain renfort mécanique de l'ensemble.

L'écrou d'étanchéité peut être vissé sur l'extrémité de la tige d'ancrage. Toutefois, préférentiellement encore, l'écrou d'étanchéité est vissé sur la partie débordante du tube fileté. En conséquence, l'appui étanche du bord annulaire inférieur de l'écrou d'étanchéité sur la platine dépendra uniquement du serrage de l'écrou d'étanchéité, et ne sera pas influencé au cas où la tension de la tige d'ancrage viendrait à changer, comme ce serait le cas si l'écrou d'étanchéité était vissé sur la tige d'ancrage.

Selon un mode de réalisation particulier, la platine comporte une partie centrale en forme de dôme, tronconique ou hémisphérique, la partie périphérique de la platine restant plane. Cette forme permet d'assurer un meilleur appui de la platine sur la toiture, et permet aussi de surélever la zone centrale percée de ladite platine, limitant les risques d'infiltration d'eau au niveau du passage de la tige d'ancrage ou du tube fileté à travers la platine.

Selon une disposition complémentaire, le tube fileté s'étend en dessous du dôme sur une distance inférieure à la hauteur du dôme, ce qui évite de faire pénétrer le tube fileté dans le trou réalisé dans la toiture.

Selon une autre disposition préférentielle, le dispositif d'ancrage comprend une collerette d'étanchéité qui comporte une découpe centrale pour le passage de la tige d'ancrage et du tube fileté, et recouvre au moins le bord périphérique de la platine et s'étend au-delà de ce bord, de manière à pouvoir être raccordée de manière étanche à la toiture, par collage ou soudage avec la membrane d'étanchéité, bitume, PVC ou EPDM, de la toiture.

Préférentiellement, lorsque la platine comporte un dôme, une partie centrale de la collerette, formant le bord de la découpe, se prolonge sur le dôme, ce qui déporte la jonction entre le dôme et la collerette vers le haut. Un chapeau de finition recouvre le dôme et ladite partie centrale de la collerette pour assurer une protection complémentaire de la liaison entre collerette et dôme, et une finition présentant un meilleur aspect visuel.

Préférentiellement encore, ledit chapeau a un orifice de diamètre supérieur ou égal à celui du bord annulaire inférieur de l'écrou d'étanchéité, l'écrou d'étanchéité comportant des moyens de retenue pour retenir le chapeau sur la platine. Ces moyens de retenue peuvent notamment être formés par un épaulement entre le bord annulaire inférieur de l 'écrou d'étanchéité, et le corps de celui-ci. Ainsi le chapeau est maintenu en place simplement, par l'écrou d'étanchéité, mais avec un certain degré de liberté, facilitant le montage.

Selon un mode de réalisation particulier, les moyens de fixation, pour la fixation de l'objet à solidariser sur la toiture, comportent un tenon fileté formé d'une pièce avec l'écrou d'étanchéité. Par ailleurs, les moyens de fixations portés par l'écrou d'étanchéité borgne peuvent également former un moyen d'ancrage (réalisés en une pièce avec l'écrou d'étanchéité ou rapporté) tel qu'un anneau ou crochet d'ancrage.

Pour assurer le maintien du dispositif sur la toiture, la tige d'ancrage peut comporter à son extrémité inférieure une fixation à bascule, de type connu en soi, qui est introduite dans un perçage réalisé dans la toiture lors du montage du dispositif d'ancrage. Ce mode de réalisation est particulièrement adapté pour des toitures du type bac étanché ou dalles béton préfabriquées.

Pour une utilisation sur une dalle béton plus épaisse, la tige d'ancrage est filetée à son extrémitée inférieure, et vissée dans une douille taraudée prévue pour être scellée dans un trou foré dans la dalle en béton, par exemple de type cheville de scellement chimique.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent :
Fig. 1: est une vue en perspective d'un premier mode de réalisation du dispositif d'ancrage, pour la fixation d'un point d'ancrage ;
Fig. 2: est une vue du dispositif en place sur une toiture de type bac étanché avec isolation et membrane d'étanchéité ;
Fig. 3: est une vue écorchée du dispositif de la Fig.2 sur la toiture de type bac étanché ;
Fig. 4: est une vue en éclaté du dispositif selon le premier mode de réalisation ;
Fig. 5: est une vue de détail en coupe de la partie supérieure du dispositif ;
Fig. 6: est une vue en perspective du dispositif, avec la collerette d'étanchéité partiellement relevée avant d'être collée avec la membrane d'étanchéité de la toiture ;
Fig. 7: est une vue de côté du dispositif, avec la collerette d'étanchéité en place et lors du montage du chapeau de finition et de l'écrou d'étanchéité ;
Fig. 8: est une vue en coupe d'un deuxième mode de réalisation du dispositif, pour la fixation par exemple d'un panneau solaire ;
Fig. 9: est une vue de détail en coupe du dispositif de la figure 8 ;
Fig. 10: est une vue en perspective d'un troisième mode de réalisation du dispositif, pour la fixation d'une ancre intermédiaire pour une ligne de vie ;
Fig. 11: est une vue du dispositif selon ce troisième mode de réalisation en place sur une toiture de type bac étanché ;
Fig. 12: est une vue de détail en coupe de la partie supérieure du dispositif ;
Fig. 13: est une vue en coup de l'écrou d'étanchéité utilisé dans le deuxième et le troisième mode de réalisation ;
Fig. 14 : est une vue en perspective d'une variante de réalisation de l'écrou d'étanchéité.

### Description d'une exécution préférée

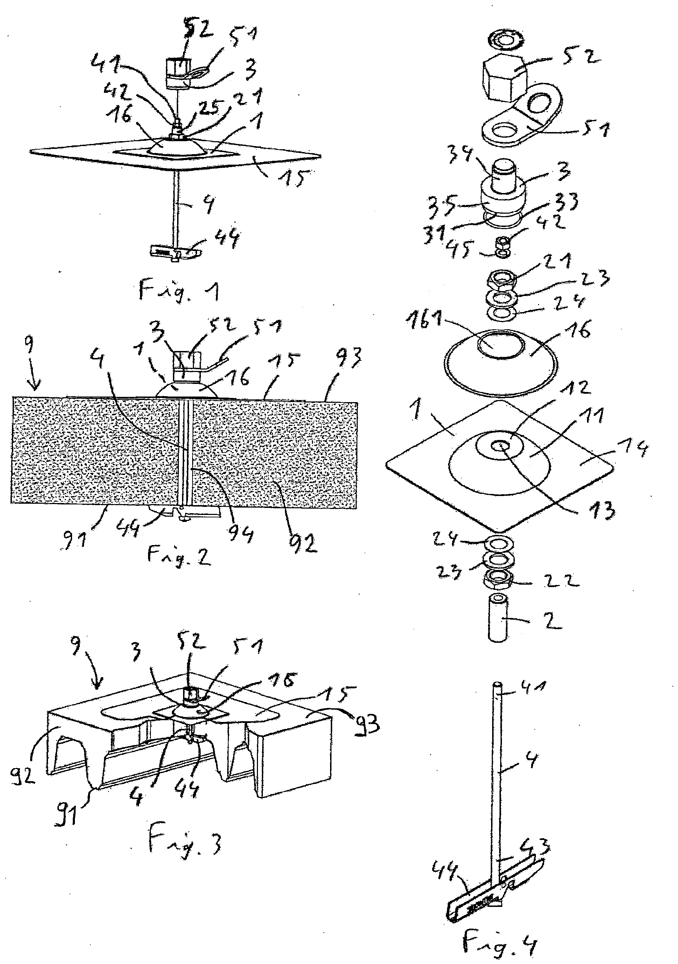

Le dispositif d'ancrage selon l'invention est destiné à être fixé sur une toiture sensiblement horizontale 9. Dans l'exemple représenté figure 2, la toiture est du type bac étanché, conventionnellement formée d'un bac acier 91 recouvert d'un isolant 92, lui-même recouvert par une membrane d'étanchéité 93 en bitume, PVC ou EPDM par exemple.

La figure 3 montre une vue écorchée correspondant à au dispositif d'ancrage de la Fig.2 sur bac étanché.

Le dispositif d'ancrage illustré dans un premier mode de réalisation par les figures 1 à 7, comporte une platine 1 en tôle d'acier inoxydable ou électrozingué. La platine 1 comporte une partie centrale emboutie formant un dôme 11 comportant un trou 13 au centre de son sommet aplani 12.

La partie périphérique 14 de la platine, destinée à venir en appui sur la toiture, s'étend dans un plan. Une collerette d'étanchéité 15, formée d'une feuille bitumineuse ou en PVC par exemple, est collée sur la face de dessus de la platine 1, et s'étend tout autour de celle-ci et au delà de son bord, pour pouvoir être collée ou soudée sur la membrane d'étanchéité 93 de la toiture. Une découpe est réalisée dans la collerette pour le passage du dôme 11, mais d'un diamètre inférieur à celui du dôme. Le bord de cette découpe est incisé radialement pour former plusieurs languettes radiales 151 qui sont collées sur le dôme, renforçant la liaison et l'étanchéité entre la collerette et la platine 1. Un chapeau de finition 16 recouvre le dôme et les languettes.

Un tube fileté 2, par exemple de 22 mm de diamètre, est fixé sur la platine, en passant dans le trou 13. Pour assurer cette fixation, le sommet plan 12 du dôme est enserré entre deux écrous 21, 22 vissés sur le tube fileté 2, avec interposition de rondelles 23 et joints plats 24, de manière à assurer une étanchéité parfaite entre le tube fileté et la platine. La longueur du tube fileté et sa position sur la platine sont déterminées de manière qu'une partie débordante supérieure 25 du tube fileté 2 dépasse au-dessus de l'écrou supérieur 21 sur une longueur suffisante, par exemple 20 mm environ, pour y visser l'écrou d'étanchéité 3 conforme à l'invention, comme on le verra par la suite. Par ailleurs, la longueur du tube sous le dôme est, dans cette variante, inférieure à la hauteur du dôme, de manière que l'extrémité inférieure du tube reste distante de la surface de la toiture lorsque le dispositif d'ancrage est mis en place.

Le dispositif d'ancrage est fixé sur la toiture, et serré contre la membrane d'étanchéité, par une tige d'ancrage 4, par exemple de diamètre 10 mm, qui passe dans le tube fileté, et dont l'extrémité supérieure 41 est filetée, pour recevoir un écrou de serrage 42. L'extrémité inférieure 43 de la tige d'ancrage comporte une bascule 44 montée pivotante sur la tige et qui peut être placée parallèlement à la tige pour permettre son introduction dans un perçage 94 réalisé dans la toiture, et qui se déploie perpendiculairement à la tige, lorsqu'elle arrive sous la toiture, pour retenir la tige lors du serrage ultérieur, de manière similaire aux boulons ou chevilles à bascules bien connus.

Le dispositif d'ancrage est maintenu serré sur la toiture par la tige d'ancrage 4, la bascule 44 venant en appui sous la toiture et l'écrou de serrage 42 s'appuyant sur l'extrémité supérieure du tube 2, avec interposition d'une rondelle frein 45 et d'un joint d'étanchéité (non montré). Après serrage de l'écrou de serrage 42, la tige d'ancrage 4 est préférablement coupée de sorte qu'une hauteur prédéfinie dépasse de l'écrou 42, par exemple 2 filets.

L'écrou d'étanchéité 3 est un écrou borgne spécifique à l'invention, qui est vissé sur la partie supérieure 25 du tube fileté 2 et chapeaute ensemble l'extrémité supérieure 41 de la tige d'ancrage et son écrou de serrage 42, ainsi que, préférablement, la partie débordante 25 du tube fileté 2 et l'écrou 21. Le bord inférieur 31 de l'écrou d'étanchéité 3 comporte avantageusement une rainure annulaire 32 pour y loger un joint torique 33, qui vient en appui sur le sommet plan 12 du dôme lorsque l'écrou d'étanchéité est vissé sur le tube 2, pour assurer l'étanchéité entre l'écrou d'étanchéité 3 et la platine 1. Par ailleurs, le bord inférieur 31 de l'écrou d'étanchéité 3 a un diamètre inférieur à celui du corps 35 de l'écrou, qui forme ainsi un épaulement de retenue pour le chapeau 16, le bord inférieur 31 passant dans l'orifice 161 du chapeau, orifice dont le diamètre est inférieur à celui du corps 35.

La partie supérieure 34 de l'écrou d'étanchéité est de plus petit diamètre que le corps 35 et elle est filetée. Elle constitue ainsi la partie du dispositif d'ancrage sur laquelle peuvent être fixés les objets que l'on souhaite maintenir sur la toiture.

Dans l'exemple présenté dans les figures 1 à 7, une plaque d'ancrage 51 est maintenue libre en pivotement sur cette partie supérieure 34 par un écrou borgne 52 serré sur l'extrémité de l'écrou d'étanchéité. Cette plaque d'ancrage comprend un trou et forme ainsi un point d'ancrage, par exemple pour protéger une personne contre les chutes de hauteur.

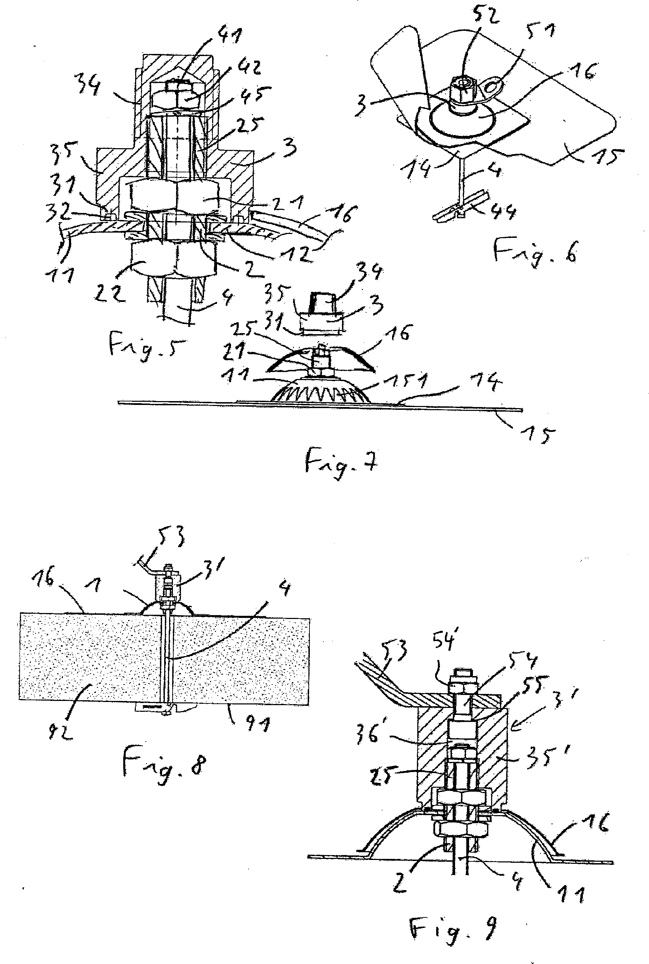

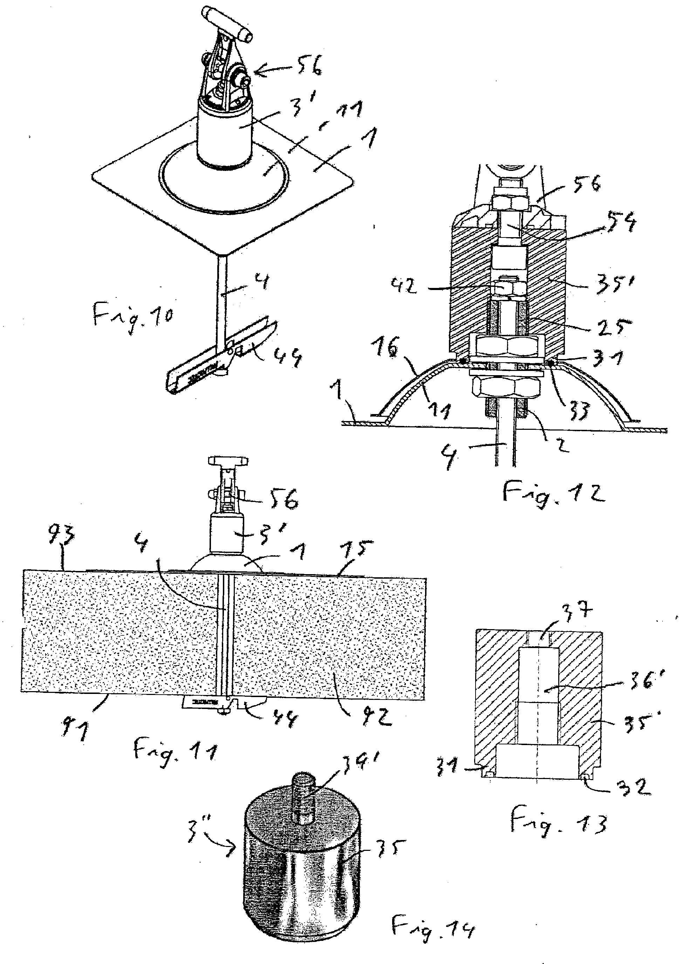

Dans le mode de réalisation représenté aux figures 8 et 9, le dispositif d'ancrage est destiné à la fixation d'un panneau solaire ou autre équipement dont on n'a représenté qu'une patte de fixation 53. Le corps de l'écrou d'étanchéité 3', représenté figure 13, est constitué par une douille 35' comportant un alésage 36' pourvu d'un taraudage adapté pour être vissé sur le tube fileté 2, et un trou 37 est percé dans le fond de la douille, du côté opposé au taraudage. La partie supérieure de l'écrou d'étanchéité 3', servant à la fixation de la patte 53, est constituée d'un boulon 54 inséré dans le trou 37. Un joint d'étanchéité 55 est placé sous la tête du boulon qui est maintenue rigidement dans l'alésage 36' de l'écrou d'étanchéité 3'. La patte 53 est fixée fermement sur l'écrou d'étanchéité 3' grâce au boulon 54 quoi comprend un écrou borgne 54'.

Ce mode de réalisation de l'écrou d'étanchéité conduit à ce que son corps 35' soit plus haut que dans l'exemple précédent, pour pouvoir loger le boulon 54. Par contre, cela permet de disposer d'une partie supérieure filetée de plus faible diamètre. Une variante de réalisation d'un tel écrou d'étanchéité 3" est représentée figure 14, la partie supérieure 34' filetée, correspondant fonctionnellement au boulon 54, étant alors formée d'une seule pièce monobloc avec le corps 35', et pouvant avoir un diamètre quelconque, adapté à l'objet à fixer.

L'exemple représenté aux figures 10 à 12, est destiné à la fixation d'une ancre intermédiaire pour une ligne de vie, telle que commercialisée sous le nom « Neo » par la société FALLPROTEC S.A. (Luxembourg). Dans cet exemple d'application particulière, le dispositif d'ancrage est identique à celui qui a été décrit en relation avec les figures 8 et 9, l'ancre intermédiaire 56 étant fixé par sa base sur l'écrou d'étanchéité 3' par le boulon 54. Un joint d'étanchéité est préférablement placé sous la tête du boulon 54 et sous la plaque de base de l'ancre intermédiaire 56. Le boulon 54 comprend également un écrou borgne, maintenu par du frein-filet. Un tel montages est aisément réalisé en atelier.

La mise en place du dispositif d'ancrage sur une toiture est effectuée de la manière suivante. Le dispositif d'ancrage est préparé en atelier par assemblage du tube fileté 2 et de la collerette 15 avec la platine 1. La tige d'ancrage 4 est passée dans le tube 2 et l'écrou de serrage 42 est engagé sur le filet de l'extrémité supérieure 41 de la tige. Sur la toiture, un trou 94 est percé à l'emplacement choisi, de diamètre suffisant pour y passer l'extrémité inférieure 43 de la tige d'ancrage avec la bascule 44. La tige d'ancrage 4 avec la bascule 44 est insérée dans ce trou, jusqu'à ce que la bascule puisse se déployer transversalement à la tige 4, sous la toiture. On tire alors la tige d'ancrage 4 en vissant l'écrou 42 pour appliquer la bascule sous la toiture et on applique le bord 14 de la platine en pression contre la membrane d'étanchéité 93 sur la toiture en serrant l'écrou 42. On coupe ensuite selon besoin la partie excédentaire de la tige d'ancrage 4 dépassant au-dessus de l'écrou 42. On peut alors mettre en place le chapeau 16 et visser l'écrou d'étanchéité 3, 3', 3", sur la partie supérieure du tube fileté 2, préalablement enduite de frein-filet, jusqu'à le serrer contre la surface supérieure plane 12 du dôme 11. On colle ou on soude la collerette 15 sur la membrane d'étanchéité 93 de la toiture. On peut alors adapter sur la partie supérieure filetée 34, 34' de l'écrou d'étanchéité, ou sur le boulon 54, l'objet à fixer.

Dans le cas ou le dispositif de fixation doit être fixé sur une dalle en béton, on remplacera le système de fixation à bascule par une fixation scellée de la tige, par exemple au moyen d'une douille taraudée scellée dans un trou réalisé dans le béton, et dans laquelle on viendra visser une extrémité inférieure filetée de la tige d'ancrage. L'opération de montage se poursuivra comme indiqué ci-dessus.

L'invention n'est pas limitée aux exemples de réalisation et d'applications qui viennent d'être décrits. En particulier, la platine de fixation pourrait aussi ne pas comporter de dôme, par exemple en étant plane, moyennant qu'il soit possible de loger la partie inférieure du tube fileté et l'écrou inférieur dans l'épaisseur de la toiture.

## Revendications

1. Dispositif d'ancrage pour une toiture, pour fixer un objet (51, 53, 56) sur ladite toiture (9), comportant une platine (1) destinée à reposer sur la toiture et comportant un trou central traversant (13), et une tige d'ancrage (4) passant à travers le trou central de la platine, et agencée pour être solidarisée sur la toiture par son extrémité inférieure et comprenant vers son extrémité supérieure un filetage recevant un écrou de fixation pour serrer la platine contre la toiture, le dispositif d'ancrage comportant aussi des moyens d'étanchéité pour assurer une étanchéité entre la tige d'ancrage et la platine et, à son extrémité supérieure, des moyens de fixation pour y fixer ledit objet,
**caractérisé en ce qu'**il comporte par ailleurs un écrou d'étanchéité (3, 3', 3") vissé à l'extrémité supérieure du dispositif et agencé pour chapeauter l'extrémité (41) de la tige d'ancrage et l'écrou de fixation (42), l'écrou d'étanchéité portant lesdits moyens de fixation (34) ; l'écrou d'étanchéité étant un écrou borgne (3, 3") ou comportant une vis (54) fixée de manière étanche dans un perçage (37) du fond de l'écrou d'étanchéité (3').

2. Dispositif selon la revendication 1, dans lequel l'écrou d'étanchéité borgne comporte un bord annulaire inférieur (31) venant en appui sur la platine (1), ledit bord annulaire inférieur (31) étant de préférence pourvu d'un joint d'étanchéité (33) pour un appui étanche sur la platine.

3. Dispositif selon la revendication 1 ou 2, comprenant en outre un tube fileté (2) assujetti de manière rigide et étanche sur la platine (1) en passant dans le trou central (13) et comportant une partie supérieure débordante (25) dépassant au-dessus de la platine, la tige d'ancrage (4) passant dans le tube fileté et l'écrou de fixation (42) venant en appui sur l'extrémité supérieure de la partie débordante du tube fileté.

4. Dispositif selon la revendication 3, dans lequel l'écrou d'étanchéité (3) est vissé sur la partie débordante (25) du tube fileté (2).

5. Dispositif selon la revendication 3 ou 4, dans lequel le tube fileté (2) est assujetti sur la platine (1) par deux écrous (21, 22) enserrant la platine avec des joints d'étanchéité (24), le bord annulaire inférieur (31) de l'écrou d'étanchéité entourant l'écrou (21) situé au-dessus de la platine.

6. Dispositif selon l'une quelconque des revendications précédentes, dans lequel la platine (1) comporte une partie centrale en forme de dôme (11).

7. Dispositif selon la revendication 6, dans lequel le tube fileté (2) s'étend en dessous du dôme sur une distance inférieure à la hauteur du dôme (11).

8. Dispositif selon l'une quelconque des revendications précédentes, comportant une colerette d'étanchéité (15) qui recouvre au moins le bord périphérique (14) de la platine et s'étend au delà de ce bord.

9. Dispositif selon la revendication 6, comportant une collerette d'étanchéité (15) qui recouvre au moins le bord périphérique plan (14) de la platine et s'étend au-delà de ce bord, une partie centrale (151) de la collerette se prolongeant sur le dôme (11), et un chapeau (16) recouvre le dôme et la partie centrale de la collerette.

10. Dispositif selon la revendication 9, dans lequel le chapeau (16) a un orifice (161) de diamètre supérieur ou égal à celui du bord annulaire inférieur (31) de l'écrou d'étanchéité (3), l'écrou d'étanchéité comportant des moyens de retenue pour retenir le chapeau sur la platine.

11. Dispositif selon l'une quelconque des revendications précédentes, dans lequel les moyens de fixations comportent un tenon fileté (34) formé d'une pièce avec l'écrou d'étanchéité.

12. Dispositif selon l'une quelconque des revendications 1 à 10, dans lequel les moyens de fixations pour y fixer ledit objet comprennent un anneau ou crochet d'ancrage formé d'une pièce avec, ou rapporté sur, l'écrou d'étanchéité borgne.

13. Dispositif selon l'une quelconque des revendications précédentes, dans lequel la tige d'ancrage (4) comporte à son extrémité inférieure une fixation à bascule (44) ; ou
dans lequel la tige d'ancrage (44) est filetée à son extrémité inférieure, et comporte une douille taraudée prévue pour être scellée dans un trou de la toiture.

14. Dispositif selon l'une quelconque des revendications précédentes, dans lequel la platine (1) est en acier inoxydable ou électrozingué.

## Patentansprüche

1. Verankerungsvorrichtung für ein Dach, zum Befestigen eines Gegenstandes (51, 53, 56) auf dem Dach (9), die eine Unterlagsplatte (9) aufweist, die dafür vorgesehen ist, auf dem Dach aufzuliegen und ein durchgehendes, mittiges Loch (13) aufweist, sowie eine Ankerstange (4), die durch das mittige Loch der Unterlagsplatte hindurchgeht und die dazu angeordnet ist, auf dem Dach mit ihrem unteren Ende verbunden zu sein und die zu ihrem oberen Ende hin ein Gewinde umfasst, das eine Befestigungsmutter aufnimmt, um die Unterlagsplatte fest an das Dach zu drücken, wobei die Verankerungsvorrichtung auch Dichtungsmittel, um eine Dichtheit zwischen der Verankerungsvorrichtung und der Unterlagsplatte zu gewährleisten, sowie an ihrem oberen Ende Befestigungsmittel, um daran den Gegenstand zu befestigen, aufweist;
**dadurch gekennzeichnet, dass** sie ferner eine Dichtmutter (3, 3', 3") aufweist, die an das obere Ende der Vorrichtung geschraubt und dazu angeordnet wird, das Ende (41) der Ankerstange und die Befestigungsmutter (42) abzudecken, wobei die Dichtmutter die Befestigungsmittel (34) trägt und wobei die Dichtmutter eine Hutmutter (3, 3") ist oder eine Schraube (54) aufweist, die in einer Durchbohrung (37) des Bodens der Dichtmutter (3') dichtend befestigt ist.

2. Vorrichtung nach Anspruch 1, wobei die Hutdichtmutter einen unteren ringförmigen Rand (31) aufweist, der auf der Unterlagsplatte (1) zur Anlage kommt, wobei der untere ringförmige Rand (31) vorzugsweise mit einer Dichtung (33) für die dichte Auflage auf der Unterlagsplatte versehen ist.

3. Vorrichtung nach Anspruch 1 oder 2, die außerdem ein Gewinderohr (2) umfasst, das biegesteif und dichtend an die Unterlagsplatte (1) gebunden ist, indem es durch das mittige Loch (13) hindurchgeht und einen überstehenden oberen Teil (25) aufweist, der über die Unterlagsplatte hinausragt, wobei die Ankerstange (4) in dem Gewinderohr hindurchgeht und die Befestigungsmutter (42) an dem oberen Ende des überstehenden Teils des Gewinderohres zur Anlage kommt.

4. Vorrichtung nach Anspruch 3, wobei die Dichtmutter (3) auf den überstehenden Teil (25) des Gewinderohres (2) geschraubt ist.

5. Vorrichtung nach Anspruch 3 oder 4, wobei das Gewinderohr (2) durch zwei Muttern (21, 22) an die Unterlagsplatte (1) gebunden ist, die die Unterlagsplatte mit Dichtungen (24) eng umschließen, wobei der untere ringförmige Rand (31) der Dichtmutter die sich über der Unterlagsplatte befindende Mutter (21) umgibt.

6. Vorrichtung nach einem der vorangehenden Ansprüche, wobei die Unterlagsplatte (1) einen mittigen Teil in Form einer Kuppel (11) aufweist.

7. Vorrichtung nach Anspruch 6, wobei sich das Gewinderohr (2) unter der Kuppel über eine Distanz erstreckt, die kleiner als die Höhe der Kuppel (11) ist.

8. Vorrichtung nach einem der vorangehenden Ansprüche, die einen Dichtflansch (15) aufweist, der mindestens den umlaufenden Rand (14) der Unterlagsplatte abdeckt und sich bis über diesen Rand hinaus erstreckt.

9. Vorrichtung nach Anspruch 6, die einen Dichtflansch (15) aufweist, der mindestens den ebenen umlaufenden Rand (14) der Unterlagsplatte abdeckt und sich bis über diesen Rand hinaus erstreckt, wobei der mittige Teil (151) des Dichtflansches sich über die Kuppel (11) erstreckt, sowie eine Abdeckhaube (16), die die Kuppel und den mittigen Teil des umlaufenden Randes abdeckt.

10. Vorrichtung nach Anspruch 9, wobei die Abdeckhaube (16) eine Öffnung (161) mit einem Durchmesser aufweist, der größer als der oder gleich dem des unteren ringförmigen Randes (31) der Dichtmutter (3) ist, wobei die Dichtmutter Haltemittel zum Halten der Abdeckhaube auf der Unterlagsplatte aufweist.

11. Vorrichtung nach einem der vorangehenden Ansprüche, wobei die Befestigungsmittel einen Gewindezapfen (34) aufweisen, der einstückig mit der Dichtmutter ausgebildet ist.

12. Vorrichtung nach einem der Ansprüche 1 bis 10, wobei die Befestigungsmittel, um daran den Gegenstand zu befestigen, einen Ankerring oder -haken aufweisen, der einstückig mit der Hutdichtmutter ausgebildet oder an ihr angebracht ist.

13. Vorrichtung nach einem der vorangehenden Ansprüche, wobei die Ankerstange (4) an ihrem unteren Ende eine Kippbefestigung (44) aufweist; oder
wobei die Ankerstange (44) an ihrem unteren Ende mit einem Gewinde versehen ist und eine Gewindebuchse aufweist, die dafür vorgesehen ist, in einem Loch des Daches verankert zu werden.

14. Vorrichtung nach einem der vorangehenden Ansprüche, wobei die Unterlagsplatte (1) aus Edelstahl besteht oder elektroverzinkt ist.

## Claims

1. An anchoring device for a roof, for fastening an object (51, 53, 56) on said roof (9), comprising a plate (1) designed to rest on the roof and comprising a central through-hole (13), and an anchoring rod (4) passing through the central hole in the plate and arranged to be firmly connected to the roof by its bottom end and comprising towards its top end a thread receiving a fastening nut for tightening the plate against the roof, the anchoring device also comprising sealing means for ensuring a seal between the anchoring rod and the plate and, at its top end, fastening means for fastening said object thereon,
**characterised in that** it further comprises a sealing nut (3, 3', 3") screwed onto the top end of the device and arranged to cap the end (41) of the anchoring rod and the fastening nut (42), the sealing nut bearing said fastening means (34), and the sealing nut being a cap nut (3, 3") or comprising a screw (54) fastened in sealing manner in a drill hole (37) in the end of the sealing nut (3').

2. The device according to claim 1, in which the sealing cap nut comprises a lower annular edge (31) which comes to rest against the plate (1), said lower annular edge (31) preferably being provided with a gasket (33) so it can rest in sealed manner on the plate.

3. The device according to claim 1 or 2, further comprising a threaded tube (2) secured rigidly and in sealing manner on the plate (1), entering the central hole (13) and comprising a protruding upper part (25) projecting above the plate, the anchoring rod (4) entering the threaded tube and the fastening nut (42) coming to rest against the top end of the protruding part of the threaded tube.

4. The device according to claim 3, in which the sealing nut (3) is screwed onto the protruding part (25) of the threaded tube (2).

5. The device according to claim 3 or 4, in which the threaded tube (2) is secured to the plate (1) by two nuts (21, 22) gripping the plate with gaskets (24), the lower annular edge (31) of the sealing nut surrounding the nut (21) situated above the plate.

6. The device according to any one of the preceding claims, in which the plate (1) comprises a central part in the form of a dome (11).

7. The device according to claim 6, in which the threaded tube (2) extends below the dome over a distance which is less than the height of the dome (11).

8. The device according to any one of the preceding claims, comprising a sealing collar (15) which covers at least the peripheral edge (14) of the plate and extends beyond this edge.

9. The device according to claim 6, comprising a sealing collar (15) which covers at least the flat peripheral edge (14) of the plate and extends beyond this edge, a central part (151) of the collar extending onto the dome (11), and a cap (16) covering the dome and the central part of the collar.

10. The device according to claim 9, in which the cap (16) has an orifice (161) of a diameter greater than or equal to that of the lower annular edge (31) of the sealing nut (3), the sealing nut comprising retaining means for retaining the cap on the plate.

11. The device according to any one of the preceding claims, in which the fastening means comprise a threaded post (34) formed in one piece with the sealing nut.

12. The device according to any one of claims 1 to 10, in which the fastening means for fastening said object thereon comprise a ring or anchoring hook formed in one piece with, or attached to, the sealing cap nut.

13. The device according to any one of the preceding claims, in which the anchoring rod (4) comprises a rocker fastening (44) at its bottom end; or
in which the anchoring rod (44) is threaded at its bottom end and comprises a screwed sleeve provided in order to be sealed in a hole in the roof.

14. The device according to any one of the preceding claims, in which the plate (1) is of stainless or electrogalvanised steel.
